# FASCICULE DE BREVET EUROPEEN

(11) **EP 0 545 838 B1**
(45) Date de publication et mention de la délivrance du brevet: **13.09.1995**
(21) Numéro de dépôt: 92450015.0
(22) Date de dépôt: 28.10.1992
(51) Int. Cl.: F16L 47/00, E21B 17/01

(54) **Tube en matériau composite pour l'industrie pétrolière et procédé de fabrication d'un tel tube**
Rohr aus Verbundwerkstoff für die Erdölindustrie und Verfahren zum Herstellen eines derartigen Rohres
Composite tube for the oil industry and method for producing such a tube

(30) Priorité: 05.11.1991 FR 9113846
(43) Date de publication de la demande: 09.06.1993
(73) Titulaire: AEROSPATIALE Société Nationale Industrielle, 75781 Paris Cédex 16 (FR); INSTITUT FRANCAIS DU PETROLE, 92500 Rueil Malmaison (FR)
(72) Inventeur: Chaussepied, Jacques Emile Charles, F-33160 Saint Médard en Jalles (FR); Huvey, Michel, F-78380 Bougival (FR); Odru, Pierre, F-94120 Fonteney sous Bois (FR); Sparks, Charles, F-78110 Le Vesinet (FR)
(74) Mandataire: Thébault, Jean-Louis

(56) Documents cités:
- EP-A- 0 266 810
- DE-C- 1 188 793
- FR-A- 2 335 784
- FR-A- 2 656 403
- GB-A- 1 522 240
- US-A- 3 406 724
- US-A- 3 467 764
- EXTRAIT DE BREVET RUSSE Derwent Publications Ltd., London GB Bul. 16/30.7.66,Class 47f & SU-A-185161 (NOVIKOV ET AL.) 21.09.66

## Description

La présente invention se rapporte à des tubes en matériau composite destinés au forage et/ou au transport de produits liquides ou gazeux, en particulier pour l'exploitation en mer et concerne plus précisément les tubes du type à embouts métalliques de raccordement.

Les tubes en matériau composite à embouts métalliques sont habituellement constitués d'une partie dite courante en matériau composite, à savoir un matériau comprenant des fibres parallèles entre elles, telles que des fibres de verre, des fibres de carbone, des fibres aramides, enrobées dans une matrice, telle qu'une matière thermodurcissable, par exemple une résine époxy, assemblée à ses deux extrémités à des embouts de raccordement métalliques, la liaison pouvant être réalisée par différentes techniques.

De tels tubes peuvent être utilisés en particulier dans les opérations de recherche et d'exploitation pétrolière en mer, par exemple comme colonne montante (appelée également "riser") reliant le fond de la mer à un support de surface ou comme tube de production ou d'injection d'eau, ou éventuellement de gaz, (appelé également "tubing");

Les colonnes montantes sont utilisées à diverses fins telles que circulation de produits pétroliers, de boues, d'eau ou de gaz ou insertion, à l'intérieur des colonnes, de tubes de production, outils de forage, de carottage, de mesure, etc.., alors que les "tubings" ne servent qu'à la seule circulation de fluides et sont directement immergés dans la mer ou bien introduits à l'intérieur de "risers".

Dans ces types de tubes doivent être assurés impérativement l'étanchéité, de l'intérieur vers l'extérieur, tant de la partie courante des tubes que de la jonction entre cette partie courante et les embouts de raccordement, ainsi que la non-dégradation en particulier de la partie courante.

Ces tubes sont constitués d'un matériau composite dont la matrice est une résine thermodurcissable et dont les fibres peuvent être de simples fibres de verre (composite dit "bas de gamme") ou des fibres de carbone, des fibres aramides, associées ou non à des fibres de verre (composite dit "haut de gamme"), les termes "bas de gamme" et "haut de gamme" étant dans la présente description de simples définitions pour faciliter l'exposé de l'invention.

Les tubes réalisés en ces matériaux soumis à un certain niveau de pression interne sont susceptibles de voir l'étanchéité de leur partie courante se dégrader par craquelage de la résine, d'où pénétration d'hydrocarbures pouvant attaquer les fibres.

Par les documents EP-A-266.810 et DE-B-1.188.793 on connaît des tubes en matériau composite à embouts métalliques, destinés à l'exploitation pétrolière en mer, mais les embouts ne sont pas rapportés sur les tubes après leur fabrication, et sont nécessaires à la réalisation des tubes et, à cet effet, sont conformés de manière tout à fait spéciale.

L'invention a pour but de pallier ces inconvénients en proposant un tube en matériau composite du type à matrice en résine thermodurcissable, équipé à chaque extrémité, ou à l'une seulement, d'un embout métallique de raccordement rapporté agencé de façon à assurer une excellente étanchéité, de l'intérieur vers l'extérieur, aussi bien au droit de la partie courante du tube qu'à celui de la jonction entre cette partie courante et l'embout métallique, tout en préservant le matériau composite notamment d'éventuelles agressions chimiques.

A cet effet, l'invention a pour objet un tube en matériau composite pour forage et/ou transport de produits liquides ou gazeux, en particulier pour l'exploitation pétrolière en mer, du type constitué d'une partie courante en matériau composite à matrice à résine thermodurcissable, assemblée, ultérieurement à la fabrication du tube, au moins à l'une de ses extrémités à un embout métallique de raccordement comportant une partie engagée au moins partiellement à l'intérieur de la partie courante, la face interne de ladite partie courante étant recouverte, d'une part, par un élément de recouvrement tubulaire en matériau étanche solidaire, notamment dans le sens axial du tube, de ladite partie courante et, d'autre part, par la face externe de ladite partie d'embout engagée à l'intérieur de la partie courante, ledit élément de recouvrement (7) et ladite partie d'embout (2) étant de le prolongation l'un de l'autre, des moyens étant prévus pour assurer une liaison étanche entre l'élément de recouvrement et ladite partie d'embout.

Le matériau étanche dudit élément de recouvrement est de préférence un matériau thermoplastique, en particulier choisi dans le groupe comprenant les polyamides, notamment le "Rilsan"®, les polypropylènes, les polyéthylènes.

L'invention s'applique plus particulièrement, bien que non exclusivement, aux tubes en matériau composite ayant une partie tubulaire composite de diamètres, interne et externe, constants d'une extrémité à l'autre.

Lesdits moyens de liaison étanche peuvent être constitués par une jonction en sifflet, un matériau de solidarisation et/ou colmatage étant interposé ou injecté entre les parties en contact.

De préférence, l'élément de revêtement en place à l'intérieur de la partie tubulaire composite présente un diamètre interne identique à celui de la partie d'embout engagée dans ladite partie tubulaire composite et la jonction en sifflet est réalisée de façon que ladite partie d'embout interne recouvre par l'intérieur ledit élément de recouvrement.

Avantageusement, une couche intermédiaire en matériau à résine thermoplastique fibrée est interposée entre la partie tubulaire composite et ledit élément de recouvrement interne, à des fins de renforcement de l'adhérence dudit élément de recouvrement interne vis à vis de ladite partie tubulaire composite.

Lesdits moyens de liaison étanche entre l'élément de recouvrement interne et l'embout de raccordement peuvent être constitués par un moyen métallique recouvrant la jonction entre les parties en regard et serti par expansion radiale. Diverses modalités de mise en oeuvre d'une telle liaison seront décrites plus loin.

Par ailleurs, à des fins de préservation de la paroi interne de tels tubes, notamment pour leur utilisation comme "risers", vis à vis des chocs et frottements d'objets pouvant circuler à l'intérieur des tubes et vis à vis des effets abrasifs des particules solides susceptibles d'être véhiculées par les produits circulant dans les tubes, au moins la face interne de l'élément de recouvrement interne non masquée par le ou les embouts de raccordement, est recouverte d'un revêtement tubulaire en matériau composite à résine thermodurcissable, de préférence de bas de gamme au sens défini plus haut.

De préférence, le revêtement interne de protection contre les chocs et les frottements définit un diamètre interne identique à celui du ou des embouts de raccordement.

Enfin, en vue d'assurer une protection étanche du tube, de l'extérieur vers l'intérieur, et résistant aux agents corrosifs et abrasifs contenus notamment dans l'eau de mer, la face externe de l'élément composite du tube, ainsi qu'au moins une partie de la paroi externe adjacente du ou des embouts de raccordement, sont recouvertes d'un élément de revêtement en forme de gaine en un matériau plastique approprié tel qu'un matériau thermoplastique, éventuellement thermorétractable, ou un élastomère.

Par ailleurs, l'invention concerne également un procédé de fabrication de tels tubes.

On va maintenant décrire plus en détails divers modes de réalisation de tubes selon l'invention, donnés à titre d'exemple uniquement et en se référant aux dessins annexés sur lesquels :
- Figure 1 est une demi-vue en coupe axiale verticale de l'extrémité d'un tube en matériau composite muni d'un embout de raccordement métallique.
- Figure 2 est une demi-vue en coupe axiale verticale de l'extrémité d'un tube conforme à l'invention, selon un premier mode de réalisation ;
- Figure 3 est une demi-vue en coupe axiale verticale de l'extrémité d'un tube conforme à l'invention, selon un second mode de réalisation ;
- Figure 4 est une demi-vue en coupe axiale verticale de l'extrémité d'un tube conforme à l'invention, selon un troisième mode de réalisation combinant ceux des figures 2 et 3 ;
- Figure 5 est une demi-vue en coupe axiale verticale de l'extrémité d'un tube conforme à l'invention, selon un quatrième mode de réalisation ;
- Figure 6 est une demi-vue en coupe axiale verticale de l'extrémité d'un tube conforme à l'invention, selon un cinquième mode de réalisation ;
- Figure 7 est une demi-vue en coupe axiale verticale de l'extrémité d'un tube conforme à l'invention, selon un sixième mode de réalisation ;
- Figure 8 est une demi-vue en coupe axiale verticale de l'extrémité d'un tube conforme à l'invention, selon un septième mode de réalisation, et
- Figure 9 est une demi-vue en coupe axiale verticale de l'extrémité d'un tube conforme à l'invention, selon un huitième mode de réalisation.

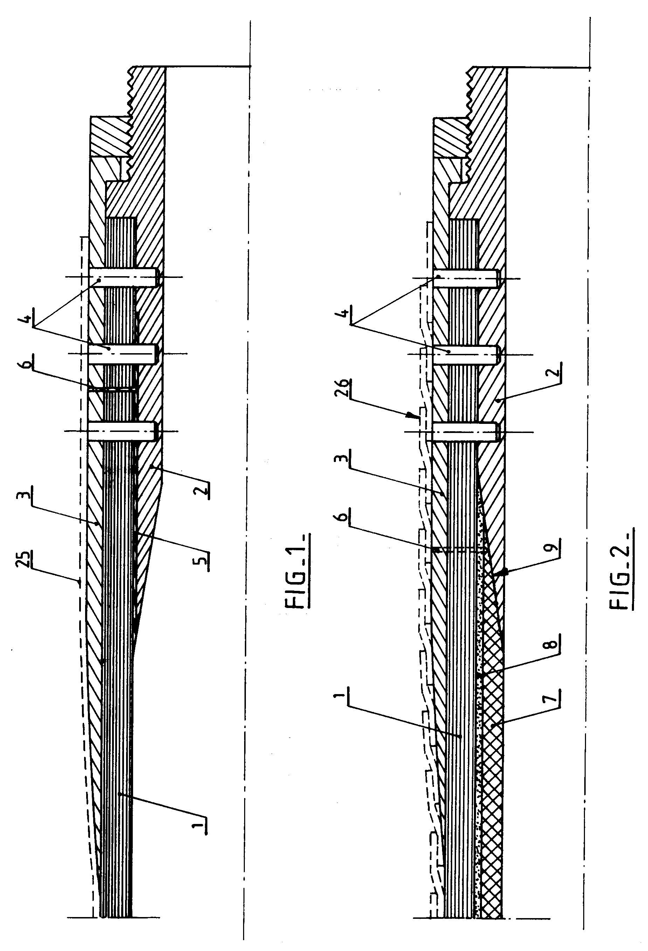

La figure 1 représente un tube en matériau composite à embout métallique de raccordement, de conception connue, constitué d'un partie tubulaire 1 cylindrique sur toute sa longueur, en matériau composite, à l'une des extrémités au moins de laquelle est rapporté un embout métallique comprenant une partie en forme de coin 2, ou insert intérieur, introduite en partie dans la partie composite 1 et une partie indépendante extérieure 3 placée en sorte d'emprisonner en sandwich l'extrémité du tube 1, la solidarisation entre tube composite 1 et embout métallique 2,3 étant assurée par des pions métalliques 4.

Le tube 1, qui présente des diamètres, interne et externe, constants sur toute sa longueur, est constitué, à la manière connue, d'un matériau composite comprenant des fibres d'un seul type, par exemple verre, carbone, aramide, ou de plusieurs types, bobinées suivant un ou plusieurs angles et noyées dans une matrice de résine thermodurcissable, par exemple une résine époxy.

Ladite partie tubulaire composite 1, ou partie courante du tube, peut comporter des fibres de verre ou des fibres de carbone ou des fibres aramides, associées ou non.

Dans l'agencement représenté en figure 1, il n'est pas prévu de revêtement étanche sur la face interne de la partie courante 1 du tube, dès lors, si un tel tube est appelé à subir des pressions internes d'un certain niveau, des craquelages de la résine thermodurcissable peuvent apparaître, dans lesquels les hydrocarbures sont susceptibles de s'insinuer et d'attaquer ainsi les fibres.

Dans des conditions de pression interne ne dépassant pas un tel niveau, on pourrait utiliser ce tube, en parachevant l'étanchéité entre la partie composite et la partie métallique des embouts 2,3 par l'injection d'un produit de colmatage 5, par exemple du type thermoplastique, au droit de l'interface composite/métal, par l'intermédiaire d'un puits ou trou d'injection 6 pratiqué, par exemple, comme illustré par la figure 1, dans la partie externe 3 de l'embout et la partie tubulaire composite 1, ou dans l'un des pions 4, le trou étant alors réalisé dans le pion, avec des canaux de dégagement latéral au niveau de la zone à colmater, avant mise en place dudit pion.

La présente invention propose de résoudre le problème de l'étanchéité, quel que soit le niveau de pression interne, de la partie courante composite 1 du tube, et de l'interface composite/métal au droit des embouts de raccordement, ainsi que le problème de l'isolement du matériau composite du tube vis à vis d'éventuelles agressions, en particulier chimiques, des produits, notamment des hydrocarbures, susceptibles de circuler dans le tube, en prévoyant, comme illustré par la figure 2, au moins une couche 7 de revêtement de la paroi interne de la partie courante 1 du tube.

Ladite couche 7, conformément à l'invention, est solidaire, en particulier dans le sens longitudinal du tube, de la partie tubulaire composite 1, et est réalisée en un matériau thermoplastique dit pur, c'est-à-dire non fibré, et en contact direct avec l'insert intérieur 2 de l'embout métallique par une liaison étanche. La couche 7 est par exemple en "Rilsan"®.

Plus précisément, dans le mode de réalisation de la figure 2, la couche 7 n'est pas directement en contact avec la partie tubulaire composite 1. Une couche intermédiaire 8 est interposée, constituée d'un matériau à résine thermoplastique dit fibré, c'est-à-dire dans lequel sont noyées des fibres de verre ou de carbone ou des fibres aramides par exemple.

La couche intermédiaire 8 est facultative et son rôle est essentiellement de réaliser une adhérence plus intime de la couche 7 sur la partie courante composite 1.

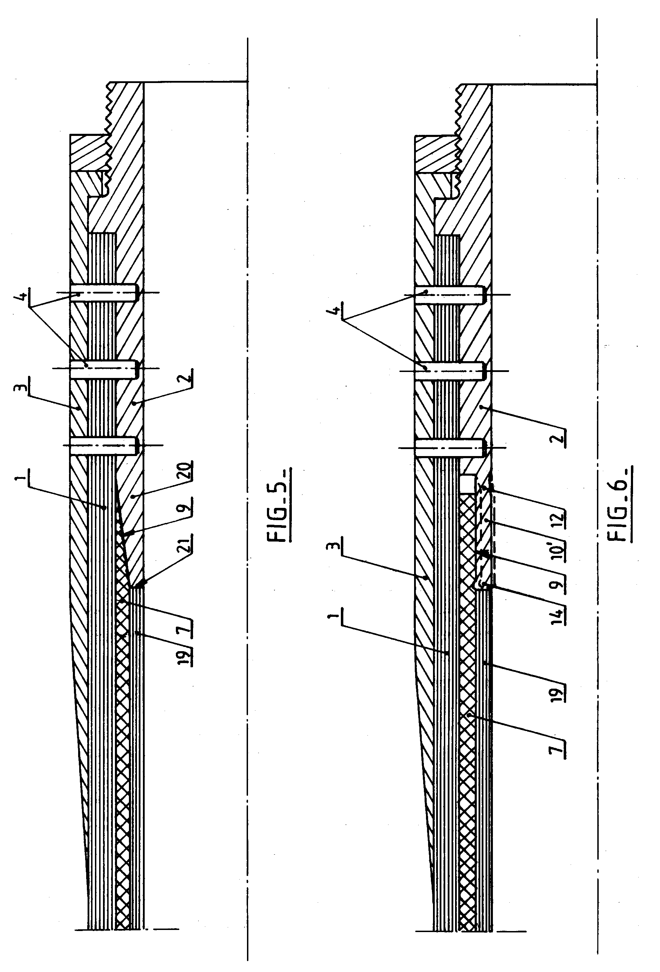

Par contre, on peut ne pas prévoir la couche intermédiaire 8 si la couche interne 7 est elle-même recouverte, sur sa face interne, d'un revêtement en matériau composite à résine thermodurcissable, comme illustré par les figures 5,6,7,9, à des fins qui seront explicitées plus loin.

Les couches 7 et 8 sont par exemple réalisées conformément aux enseignements du brevet français N° 2.645.792 aux noms des Demandeurs.

Qu'il y ait ou non une couche intermédiaire 8, la liaison de la couche 7 avec la partie interne 2 de l'embout métallique se fait de manière étanche par une jonction en sifflet, l'épaisseur de la couche 7,ou de l'ensemble couche 7-couche 8, étant de préférence déterminée de façon à être égale à celle de la partie 2, en sorte d'avoir un diamètre interne du tube final constant d'une extrémité à l'autre.

Dans le mode de réalisation représenté sur la figure 2, les couches (7,8) et la partie d'embout 2 sont en contact par leur tranche suivant un plan de joint conique 9, l'extrémité desdites couches étant prise en sandwich entre l'embout 2 et le tube 1. On pourrait éventuellement envisager une jonction en sifflet inversée, l'extrémité de la partie d'embout 2 étant prise en sandwich entre les couches 7,8 et le tube 1, bien que ce mode de réalisation soit plus difficile à réaliser techniquement.

L'étanchéité au droit de l'interface 9 peut être obtenue de diverse manières. On peut, par exemple, injecter, par un trou 6 du type de celui de la figure 1, dans ledit interface 9, un produit de colmatage du type thermoplastique. On peut aussi recouvrir la tranche biseautée de l'embout 2, avant son insertion dans le tube 1, d'une mince couche d'un matériau thermoplastique, tel que du "Rilsan"®, et souder thermiquement de la sorte, ou par tout autre technique, avec apport de matière ou non, la tranche de l'embout 2 sur celle des couches 7,8.

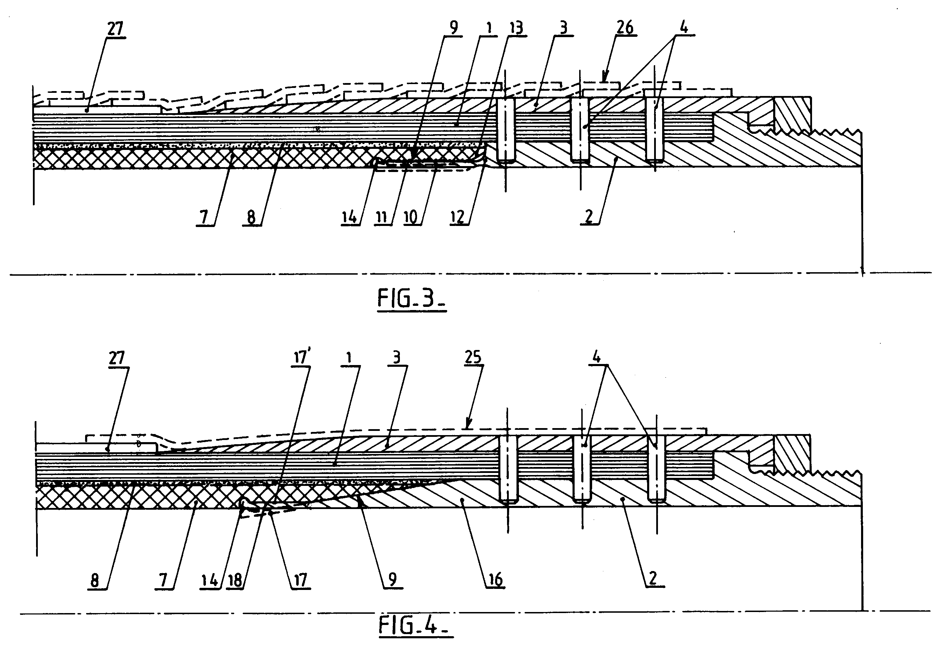

La figure 3 illustre une autre manière d'assurer la jonction étanche entre les couches 7,8 et la partie d'embout 2.

Cette dernière est usinée de façon à constituer dans le prolongement de l'extrémité interne de ladite partie 2, une virole cylindrique 10 de sertissage, d'épaisseur réduite, susceptible de recouvrir l'extrémité de la couche 7 qui est, à cet effet, entaillée pour ménager un logement 11 de réception de le virole 10, dont la profondeur est calculée pour qu'une fois le virole 10 sertie, la face interne de celle-ci soit sensiblement de niveau avec les faces internes de l'embout 2 et de la couche 7.

Pour faciliter le sertissage, avantageusement,la virole 10 est usinée de façon à être reliée au corps 2 par un pontage 12 légèrement arqué en direction de l'extérieur, le rebord interne de la couche 7 étant biseautée en 13 pour laisser le jeu nécessaire. De même, le rebord externe de la virole 10 comporte avantageusement un bourrelet 14 qui, après sertissage, assurera localement un meilleur contact étanche.

La face externe de la virole 10 peut comporter des saillies circonférentielles pour améliorer également le contact étanche.

L'étanchéité obtenue normalement par le sertissage peut être renforcée par chauffage lors du sertissage et/ou mise en place d'un matériau thermoplastique de colomatage sur l'interface 9 comme dans l'exemple de la figure 2.

La figure 4 illustre une variante combinant la jonction en sifflet de la figure 2 et le sertissage selon la figure 3. A cet effet, l'extrémité de la partie 2 de l'embout est tout d'abord usinée en biseau (16) comme sur la figure 2, puis prolongée par une partie mince 17 d'épaisseur constante et de forme tronconique. La partie 17 est munie d'encoches (non représentées) suivant des génératrices, réparties sur le pourtour de ladite partie 17 pour faciliter l'expansion vers l'extérieur lors du sertissage.

De même, l'extrémité des couches 7,8 est biseautée en correspondance avec la partie 16 et un logement 18, analogue au logement 11 de la figure 3, est ménagé sur la face interne de la couche 7. Un bourrelet 14 ou des saillies circonférentielles sont avantageusement ménagés comme dans le mode de réalisation de la figure 3.

Au sertissage, la partie 17 vient se plaquer (17') contre le fond du logement 11, la face interne de la partie 17 venant sensiblement dans l'alignement avec les parois internes de la couche 7 et de l'embout 2.

L'étanchéité au droit de la jonction matière thermoplastique-métal peut être renforcée par des moyens similaires à ceux évoqués plus haut (soudage thermique, matériau thermoplastique de colmatage de l'interface 9, etc...)
Dans ce mode de réalisation, de même que dans le cas de la figure 3, on peut ne pas prévoir de couche 8 intermédiaire.

Dans le mode de réalisation de la figure 5, conformément à l'invention et afin de préserver la matière thermoplastique de la couche 7 des chocs, frottements et abrasion qu'elle ne pourrait supporter, le tube étant plus spécialement destiné à la réalisation de "risers", la face interne de ladite couche 7 est revêtue d'une peau 19 d'un matériau composite à résine thermodurcissable de préférence du type "bas de gamme" au sens défini plus haut.

La peau 19 peut être par exemple un simple composite du type verre/époxy et recouvre la totalité de la face interne de la couche 7 entre les parties d'embout 2, l'épaisseur de la peau 19 étant déterminée de façon que la face interne de la peau soit de niveau avec celle des parties d'embout 2.

L'extrémité de la partie d'embout 2 est conformée en sifflet en 20 pour être liée à la couche 7 comme dans les exemples des figures 2 et 4 et se termine par une tranche droite 21 venant en butée contre la tranche de la peau 19.

L'étanchéité au droit de l'interface 9 (jonction couche 7-embout 2) peut être obtenue comme exposé plus haut à propos des modes de réalisation des figures 2 et 4.

Une couche intermédiaire du type de la couche 8 des figures 2 à 4 peut éventuellement être interposée entre le tube 1 et la couche 7.

La figure 6 illustre une variante du mode de réalisation de la figure 3 appliquée au cas où une peau 19 de protection contre les chocs et l'usure serait prévue sur la face interne de la couche 7 de la figure 3.

La partie d'embout 2 est prolongée par une virole cylindrique 10' de sertissage analogue à la virole 10 de la figure 3 et susceptible d'être sertie directement contre la face en regard de la couche 7 sans aménagement préalable de cette face. Un bourrelet 14 ou des saillies circonférentielles sont avantageusement ménagés comme dans le mode de réalisation des figures 3 et 4.

Après sertissage, la face interne de la virole 10' est sensiblement de niveau avec celle de la couche 19 et de la partie d'embout 2.

La couche 7 ne vient pas en butée contre la partie 2 pour laisser du jeu au pontage 12 de liaison de la virole lors du sertissage de celle-ci.

L'interface 9 fait éventuellement l'objet d'une étanchéité complémentaire comme dans les exemples des figures 2 à 5, par les mêmes moyens que ceux exposés.

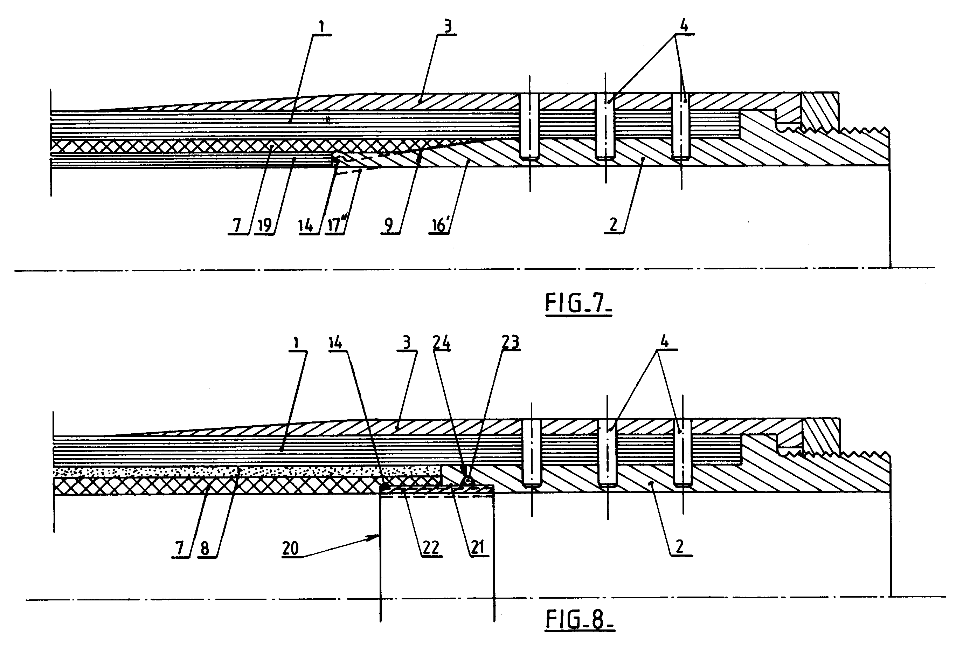

La figure 7 illustre l'application de l'embout serti de la figure 4 à un tube composite comportant une couche 7 étanche et anti-corrosion et une peau 19 contre les chocs, les frottements et l'usure.

La partie en biseau 16' de l'embout 2 est en contact par une jonction en sifflet avec la couche 7, cependant que la virole 17'' est sertie contre la face interne de ladite couche 7. Après sertissage, la face interne de la virole 17'' est sensiblement de niveau avec celle de la peau 19 et de l'embout 2.

L'interface 9 fait éventuellement l'objet d'une étanchéité complémentaire comme dans les exemples des figures 2 à 6, par les mêmes moyens.

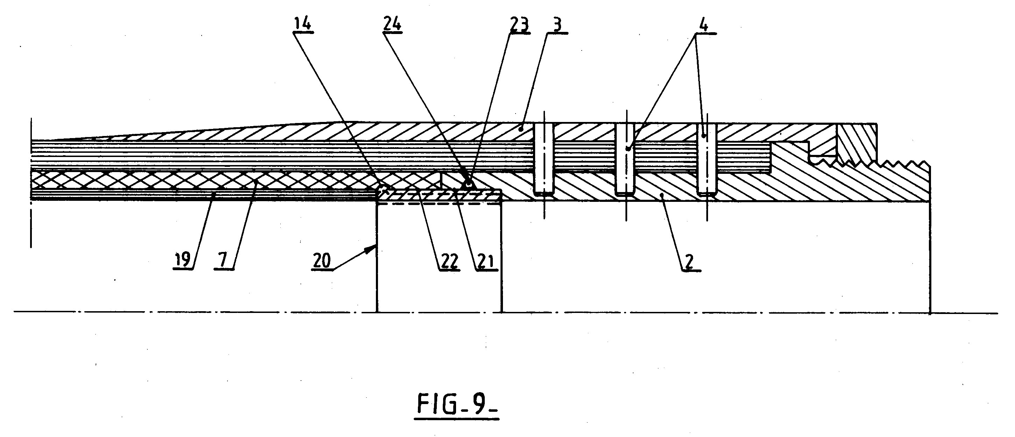

Les figures 8 et 9 illustrent deux autres modes de réalisation dans lesquels la jonction entre matière thermoplastique et métal est assurée par une bague métallique cylindrique 20 expansée.

A cet effet, la bague 20 est, avant expansion, disposée à cheval sur la partie d'embout 2 et l'élément thermoplastique ménagé sur la face interne de la partie tubulaire composite 1 du tube, lequel élément est, soit (figure 8) une couche 7 d'un matériau du type des couches 7 des modes de réalisation précédents, une couche intermédiaire 8 étant (ou non) interposée entre la couche 7 et la partie courante 1, soit (figure 9) une couche 7 de même nature que ci-dessus, recouverte d'une peau 19 du type des peaux 19 des exemples précédents.

La bague 20 est reçue dans des logements 21,22 ménagés à cet effet respectivement, d'une part, dans la face interne de la partie d'embout 2 et, d'autre part, dans la face interne de la couche 7 (figure 8) ou de l'ensemble couche 7-peau 19 (figure 9). Dans les deux cas, la bague 20 viendra, lorsqu'elle sera expansée (par tous moyens appropriés), en contact de sertissage étanche avec la matière thermoplastique de la couche 7.

Le rebord (côté composite) de la bague 20 est muni extérieurement d'un bourrelet 14 assurant localement, après expansion de la bague 20, un meilleur contact étanche et, à des fins d'étanchéité, au moins un joint annulaire 23 est reçu et comprimé dans une gorge 24 ménagée dans la paroi du logement 21. La face externe de la bague 20 peut être munie de saillies circonférentielles.

Un des intérêts de l'utilisation d'une bague rapportée telle que la bague 20 réside dans le fait que le matériau de cette bague peut être choisi pour son aptitude à un sertissage efficace. De plus, lors de l'expansion de la bague 20, le ou les joints 23 seront comprimés, ceci autorisant, sans rompre l'étanchéité, d'éventuels mouvements relatifs, axialement au tube, entre les embouts et la partie courante du tube.

D'une manière générale, le sertissage de la partie concernée de l'embout 2, ainsi que l'expansion de la bague 20 lorsque cette solution est choisie, sont effectués de façon à déformer le métal considéré et à l'amener au-delà de son domaine élastique, la déformation étant irréversible.

D'une manière générale, les divers tubes illustrés par les figures 2 à 9, ainsi que tous les tubes conformes à l'invention, peuvent être revêtus extérieurement d'une gaine d'étanchéité, de l'extérieur vers l'intérieur du tube, en matériau résistant aux agents corrosifs et abrasifs susceptibles de se trouver dans le milieu dans lequel sera plongé le tube.

Cette gaine peut être, par exemple, en matériau thermoplastique, éventuellement thermorétractable. On peut utiliser notamment du polypropylène, du polyéthyline ou du "Rilsan"®.

La gaine recouvre la partie tubulaire composite 1 du tube ainsi que la partie externe des embouts métalliques de raccordement, en sorte de recouvrir au moins les pions 4.

Une telle gaine peut être un manchon en matériau thermorétractable comme représenté schématiquement en 25 sur la figure 1 ou constituée, comme schématisé en 26 sur la figure 2, par un enrubannage à chevauchement. L'enrubannage est fait à chaud et permet d'obtenir, à hauteur des embouts métalliques, une soudure des spires entre elles, ainsi que sur la partie métallique et, à hauteur de la partie courante du tube, une soudure des seules spires entre elles.

Si le tube 1 comporte un revêtement externe 27 en matériau thermoplastique du type de celui des couches 7 des exemples décrits ci-dessus, comme illustré par les figures 3 et 4, la jonction couche 27-embout 3 est recouverte, soit d'un enrubannage 26 (figure 3), soit d'une manchon 25 en matériau thermorétractable (figure 4).

D'une manière générale, toutes les jonctions internes matière thermoplastique-métal, quel que soit leur mode de réalisation, pourront faire l'objet d'une injection d'un produit de colmatage approprié, comme illustré par la figure 2, ou suivant une autre technique, au niveau de l'interface couche 7-métal.

L'invention s'applique aux tubes dont la partie tubulaire composite est de diamètre (interne et externe) constant d'un bout à l'autre, mais également aux tubes présentant aux extrémités, pour ce qui concerne la partie composite, un diamètre, notamment un diamètre externe, supérieur à celui de la partie courante du tube.

L'invention s'applique également à tout tube en matériau composite et à embouts de raccordement métalliques, quels que soient les formes et agencements des embouts et les moyens d'assemblage de ceux-ci à la partie composite du tube.

L'invention s'applique ainsi à des tubes dont la partie courante en matériau composite n'est pas simplement constituée d'un matériau unique, tel le matériau constitutif de la partie courante 1 des modes de réalisation illustrés par les dessins annexés, mais peut être constituée de plusieurs couches concentriques de matériaux, composites ou non, de natures et caractéristiques différentes.

Dans tous les cas de figure, il faut noter que les couches selon l'invention, telles que celles référencées 7 et 8 sur les dessins, sont solidaires de la face interne de la partie courante composite du tube. Ces couches 7,8 "suivent" donc notamment les allongements et contractions éventuels dans le sens longitudinal du tube de ladite partie courante composite.

L'invention concerne également un procédé pour réaliser industriellement de tels tubes dans lequel on part avantageusement de tubes préexistant en stocks, notamment des tubes réalisés selon le brevet français N° 2.645.792 cité plus haut.

De tels tubes sont constitués d'une partie courante en matériau composite à résine thermodurcissable, de diamètres, interne et externe, constants, munis intérieurement d'une couche en matériau thermoplastique du type de la couche 7 des exemples décrits ci-dessus, avec interposition éventuelle d'une couche à résine thermoplastique fibrée du type de la couche 8. Ladite couche en matériau thermoplastique est éventuellement recouverte intérieurement d'une peau en matériau composite à résine thermodurcissable du type de la peau 19.

Conformément à l'invention, on sectionne donc de tels tubes à la longueur désirée, en vue de munir les extrémités d'embouts de raccordement du type illustré sur les figures 1 à 9 décrites ci-dessus et l'on usine à cet effet les extrémités des couches internes de la partie courante des tubes pour dégager la place des embouts 2, et préparer la liaison entre ladite couche en matériau thermoplastique et la partie métallique des embouts 2. S'il s'agit d'une jonction en sifflet comme illustré par les figures 2,5,7, la tranche de ladite couche en matériau thermoplastique sera biseautée. S'il s'agit d'une jonction par sertissage ou expansion d'une bague 20 comme illustré par les figures 3,8,9, on procédera à l'usinage des logements 11,22.

Les parties d'embout 2 seront par ailleurs usinées selon le type de jonction désiré.

Les embouts 2 sont ensuite mis en place aux extrémités des tubes ainsi préparés, la solidarisation entre le métal de l'embout 2 ou de la bague 20 et ladite couche en matériau thermoplastique, ainsi que l'éventuel colmatage complémentaire, étant réalisés selon l'un des moyens décrits plus haut. A ce sujet, on peut noter que dans les versions à jonction en sifflet, le soudage peut être réalisé par rotation relative entre la partie courante du tube et l'embout 2, les parties d'embout 3 et les pions 4 étant mis en place ensuite.

Si on part de tubes possédant une couche telle que la couche 19 sur la face interne de ladite couche en matériau thermoplastique, on usinera bien entendu en conséquence cette couche.

Si on part, enfin, de tubes existants comportant en outre une couche externe du type de la couche 27 (figures 3 et 4), on usinera également cette couche en vue de mettre en place les embouts de raccordement, puis l'enrubannage 26 ou le manchon 25, si de tels revêtements sont souhaités.

Il est par ailleurs à noter que dans les versions à sertissage ou expansion de bague, l'opération de sertissage ou analogue est réalisée après mise en place des parties externes 3 d'embout et des pions 4, la partie 3 recouvrant bien au-delà la zone de sertissage ou expansion et formant enclume en quelque sorte, assurant ainsi un sertissage homogène et efficace.

Le procédé ci-dessus s'applique bien entendu au cas de tubes préexistants comportant au lieu d'une couche 7 en matériau thermoplastique une couche d'un élastomère du type indiqué plus haut.

Bien que l'élément de revêtement 7 selon l'invention ait été décrit comme étant constitué préférentiellement d'un matériau thermoplastique, on pourrait envisager d'utiliser comme matériau constitutif de ladite couche 7 un matériau élastique tel qu'un élastomère et en particulier du BUNA, HNBR (Hydrogeneted-Nitrile-Buna-Rubbers) ou tout autre matériau étanche susceptible de convenir.

Dans le cas de l'utilisation d'une couche 7 d'élastomère, la jonction entre cette couche et la partie métallique (embout 2 ou bague 20) serait collée et non plus soudée.

## Revendications

1. Tube en matériau composite pour forage et/ou transport de produits liquides ou gazeux, en particulier pour l'exploitation pétrolière en mer, du type constitué d'une partie courante (1) en matériau composite à matrice à résine thermodurcissable, assemblée, ultérieurement à la fabrication du tube, au moins à l'une de ses extrémités, à un embout métallique de raccordement comportant une partie (2) engagée au moins partiellement à l'intérieur de la partie courante, la face interne de ladite partie courante (1) étant recouverte, d'une part, par un élément de recouvrement tubulaire (7) en matériau étanche, solidaire, notamment dans le sens axial du tube, de ladite partie courante et, d'autre part, par la face externe de ladite partie d'embout (2) engagée à l'intérieur de la partie courante, ledit élément de recouvrement (7) et ladite partie d'embout (2) étant dans le prolongement l'un de l'autre, des moyens étant prévus pour assurer une liaison étanche entre l'élément de recouvrement (7) et ladite partie d'embout (2).

2. Tube suivant la revendication 1, caractérisé en ce que lesdits moyens de liaison étanche sont constitués par une jonction en sifflet, un matériau de solidarisation et/ou colmatage étant interposé ou injecté entre les parties en contact (7,2).

3. Tube suivant la revendication 2, caractérisé en ce que l'élément de recouvrement (7) en place à l'intérieur de la partie tubulaire composite (1) présente un diamètre interne identique à celui de la partie d'embout (2) engagée dans ladite partie tubulaire composite et la jonction en sifflet est réalisée de façon que ladite partie d'embout interne (2) recouvre par l'intérieur ledit élément de recouvrement (7).

4. Tube suivant l'une des revendications 1 à 3, caractérisé en ce que ledit élément de recouvrement (7) est un matériau thermoplastique, en particulier choisi dans le groupe comprenant les polyamides, notamment le "Rilsan"®, les polypropylènes, les polyéthylènes.

5. Tube suivant l'une des revendications 1 à 3, caractérisé en ce que ledit élément de recouvrement (7) est en un matériau élastomère, en particulier du BUNA, HNBR (Hydrogeneted-Nitrile-Buna-Rubbers).

6. Tube suivant la revendication 4, caractérisé en ce qu'un revêtement intermédiaire (8) en matériau composite à résine thermoplastique fibrée est interposé entre la partie tubulaire composite (1) et ledit élément de recouvrement interne (7) à des fins de renforcement de l'adhérence dudit élément de recouvrement interne vis à vis de ladite partie tubulaire composite (1).

7. Tube suivant l'une des revendications 1 et 4 à 6, caractérisé en ce que lesdits moyens de liaison étanche entre l'élément de recouvrement interne (7) et l'embout de raccordement (2) sont constitués par un moyen métallique (10,10',17,17'',20) recouvrant la jonction entre les parties en regard et serti par expansion radiale.

8. Tube suivant la revendication 7, caractérisé en ce que ledit moyen métallique est une virole cylindrique ou tronconique (10,10',17,17'') faisant partie intégrante de l'embout (2).

9. Tube suivant la revendication 8, caractérisé en ce que la virole est cylindrique (10,10') et reliée au corps de l'embout (2) par un pontage (12) de forme appropriée.

10. Tube suivant la revendication 7, caractérisé en ce que ledit moyen métallique est une bague cylindrique (20), expansée, en matériau approprié, disposée à cheval sur la jonction matériau étanche/métal et reçue dans des logements appropriés (21,22) réalisés dans les parties réceptrices respectivement métallique et en matériau étanche.

11. Tube suivant la revendication 10, caractérisé en ce qu'au moins un joint d'étanchéité (23) est interposé entre ladite bague (20) et l'embout métallique (2).

12. Tube suivant l'une des revendications 8 à 11, caractérisé en ce que la face externe, côté matériau étanche, de la virole (10,10',17,17'') ou de la bague (20) est muni d'un bourrelet d'étanchéité (14) ou de saillies circonférentielles.

13. Tube suivant l'une des revendications 7 à 12, caractérisé en ce qu'un matériau de colmatage approprié est injecté dans l'interface matériau étanche/métal (9).

14. Tube suivant l'une des revendications 1 à 13, caractérisé en ce que la face interne de l'élément de recouvrement interne (7), non masquée par le ou les embouts de raccordement (2), est recouverte d'un revêtement tubulaire (19) en matériau composite à résine thermodurcissable.

15. Tube suivant la revendication 14, caractérisé en ce que ledit revêtement tubulaire en matériau composite à résine thermodurcissable (19) présente un diamètre interne identique à celui du ou des embouts de raccordement (2).

16. Tube suivant l'une des revendications 1 à 15, caractérisé en ce qu'au moins une partie de la partie tubulaire composite du tube (1), ainsi qu'au moins une partie de la paroi externe adjacente (3) du ou des embouts de raccordement, sont recouvertes d'un élément de revêtement en forme de gaine (25,26) en un matériau plastique approprié tel qu'un matériau thermoplastique ou un élastomère.

17. Tube suivant la revendication 16, caractérisé en ce que ladite gaine est formée par un manchon en matériau thermorétractable (25).

18. Tube suivant la revendication 16, caractérisé en ce que ladite gaine est formée par un enrubannage (26) soudé au droit de chaque embout (3).

19. Procédé de fabrication de tubes selon l'une des revendications 1 à 18, caractérisé en ce qu'à partir de tubes préexistants, du type constitué d'une partie courante (1) en matériau composite à résine thermodurcissable, de diamètres, interne et externe, constants, munis intérieurement d'une couche étanche (7), avec interposition éventuelle d'une couche à résine thermoplastique fibrée (8), ladite couche (7) étant elle-même éventuellement recouverte intérieurement d'une peau en matériau composite à résine thermodurcissable (19), on sectionne de tels tubes à la longueur désirée, en vue de munir au moins l'une des extrémités d'un embout de raccordement (2,3) et l'on usine, d'une part, les extrémités des couches internes (7,8,19) de la partie courante (1) des tubes pour dégager la place de l'embout (2) et préparer la liaison entre ladite couche étanche (7) et la partie métallique de l'embout (2), et d'autre part, ladite partie d'embout (2), suivant le mode de jonction désiré, puis on met en place ledit embout (2) à l'extrémité des tubes ainsi préparés, et l'on opère la solidarisation appropriée entre métal et matière thermoplastique ou élastomère, ainsi qu'éventuellement un colmatage complémentaire au droit de ladite jonction.

20. Procédé suivant la revendication 19, caractérisé en ce que ladite jonction métal/matière thermoplastique est une jonction en sifflet, le métal étant souda thermiquement à la matière thermoplastique, avec apport ou non de matière.

21. Procédé suivant la revendication 20, caractérisé en ce que la soudure thermique est réalisée par friction par rotation relative entre l'embout métallique (2) et ladite couche en matériau thermoplastique (7).

22. Procédé suivant la revendication 19, caractérisé en ce que ladite jonction métal/matière thermoplastique ou élastomère est une jonction par sertissage ou analogue d'une partie de l'embout (2) ou d'une pièce rapportée (20), réalisé après mise en place de la partie (3) externe au tube de l'embout, cette partie servant d'enclume lors dudit sertissage.

23. Procédé suivant l'une des revendications 19 à 22, caractérisé en ce que, dans le cas où l'on part de tubes préexistants munis extérieurement d'une couche (27) en matériau thermoplastique, ladite couche (27) est enlevée au moins à l'une des extrémités du tube, sur une longueur suffisante pour le montage de la partie externe de l'embout (3) et éventuellement pour un recouvrement par gainage (25,26) d'au moins une partie dudit embout (3) et de la partie externe du tube entre cet embout et ladite couche (27).

## Claims

1. Pipe made of composite material for drilling and/or conveying liquid or gaseous products, particularly for offshore oil exploitation, of the type consisting of a running part (1) made from composite material with a thermosetting resin matrix, joined, after manufacture of the pipe, at at least one of its ends, to a metal connecting piece having a part (2) at least partly engaged inside the running part, the internal face of the said running part (1) being covered, on the one hand, with a tubular covering element (7) made from impervious material, fixed, notably in the axial direction of the pipe, to the said running part and, on the other hand, with the external face of the said connecting piece part (2) engaged inside the running part, the said covering element (7) and the said connecting piece part (2) being in line with one another, means being provided to ensure an impervious joint between the covering element (7) and the said connecting piece part (2).

2. Pipe according to Claim 1, characterized in that the said impervious joining means are made up of a bevelled joint, a fixing and/or sealing material being interposed or injected between the parts in contact (7, 2).

3. Pipe according to Claim 2, characterized in that the covering element (7) positioned inside the composite tubular part (1) has an internal diameter identical to that of the connecting piece part (2) engaged in the said composite tubular part, and the bevelled joint is produced in such a way that the said internal connecting piece part (2) covers the said covering element (7) on the inside.

4. Pipe according to one of Claims 1 to 3, characterized in that the said covering element (7) is a thermoplastic material chosen particularly from among the group comprising polyamides, notably "Rilsan"®, polypropylenes and polyethylenes.

5. Pipe according to one of Claims 1 to 3, characterized in that the said covering element (7) is made from an elastomer material, in particular BUNA or HNBR (Hydrogenated-Nitrile-Buna-Rubbers).

6. Pipe according to Claim 4, characterized in that an intermediate lining (8) made from a fibrous thermoplastic resin composite material is interposed between the composite tubular part (1) and the said internal covering element (7) for the purpose of reinforcing the adhesion of the said internal covering element to the said composite tubular part (1).

7. Pipe according of one of Claims 1 and 4 to 6, characterized in that the said impervious joining means between the internal covering element (7) and the connecting piece (2) consist of a metal means (10, 10', 17, 17'', 20) covering the joint between the opposite parts and crimped by radial expansion.

8. Pipe according to Claim 7, characterized in that the said metal means is a cylindrical or tapered ferrule (10, 10', 17, 17'') forming an integral part of the connecting piece (2).

9. Pipe according to Claim 8, characterized in that the ferrule is cylindrical (10, 10') and connected to the body of the connecting piece (2) by a coupling (12) of suitable shape.

10. Pipe according to Claim 7, characterized in that the said metal means is an expanded cylindrical ring (20) made from suitable material, disposed straddling the impervious material/metal joint and received in suitable recesses (21, 22) formed in the receiving parts made of metal and impervious material respectively.

11. Pipe according to Claim 10, characterized in that at least one seal (23) is interposed between the said ring (20) and the metal connecting piece (2).

12. Pipe according to one of Claims 8 to 11, characterized in that the external face, on the same side as the impervious material of the ferrule (10, 10', 17, 17'') or of the ring (20) is provided with a sealing strip (14) or circumferential projections.

13. Pipe according to one of Claims 7 to 12, characterized in that a suitable sealing material is injected into the impervious material/metal interface (9).

14. Pipe according to one of Claims 1 to 13, characterized in that the internal face of the internal covering element (7) not concealed by the connecting piece or pieces (2) is covered with a tubular lining (19) made from a thermosetting resin composite material.

15. Pipe according to Claim 14, characterized in that the said tubular lining made from a thermosetting resin composite material (19) has an internal diameter identical to that of the connecting piece or pieces (2).

16. Pipe according to one of Claims 1 to 15, characterized in that at least part of the composite tubular part of the pipe (1) and at least part of the adjacent external wall (3) of the connecting piece or pieces are covered with a lining element in the form of a sheath (25, 26) made from a suitable plastic material such as a thermoplastic material or an elastomer.

17. Pipe according to Claim 16, characterized in that the said sheath is formed by a sleeve made from heat-shrinking material.

18. Pipe according to Claim 16, characterized in that the said sheath is formed from ribbon (26) welded on each connecting piece (3).

19. Method for fabricating pipes according to one of Claims 1 to 18, characterized in that, from pre-existing pipes of the type consisting of a running part (1) made from thermosetting resin composite material, of constant internal and external diameters, fitted on the inside with an impervious layer (7) with the optional interposition of a fibrous, thermoplastic resin layer (8), the said layer (7) itself optionally being covered on the inside with a skin made from thermosetting resin composite material (19), such pipes are cut to the desired length so that at least one of the ends is fitted with a connecting piece (2, 3) and, on the one hand, the ends of the inner layers (7, 8, 19) of the running part (1) of the pipes are shaped so as to leave clear a space for the connecting piece (2) and prepare the joint between the said impervious layer (7) and the metal part of the connecting piece (2) and, on the other hand, the said connecting piece part (2) is shaped, according to the desired joining method, and then the said connecting piece (2) is positioned at the end of the pipes thus prepared and suitable fixing between the metal and the thermoplastic or elastomer material is effected, and, optionally, complementary sealing in line with the said joint.

20. Method according to Claim 19, characterized in that the said metal/thermoplastic substance joint is a bevelled joint, the metal being thermally welded to the thermoplastic substance with or without the addition of material.

21. Method according to Claim 20, characterized in that the thermal welding is effected through friction by relative rotation between the metal connecting piece (2) and the said layer made from thermoplastic material (7).

22. Method according to Claim 19, characterized in that the said metal/thermoplastic or elastomer substance joint is a joint produced by crimping or the like of a part of the connecting piece (2) or of an attached piece (20), effected after fitting of the part (3) external to the pipe, this part acting as an anvil during the said crimping.

23. Method according to one of Claims 19 to 22, characterized in that, in the case where the starting point is pre-existing pipes provided on the outside with a layer (27) made from thermoplastic material, the said layer (27) is removed from at least one of the ends of the pipe over a length sufficient for mounting the external part (3) of the connecting piece and optionally for covering with sheathing (25, 26) at least part (3) of the said connecting piece and of the external part of the pipe between this connecting piece and the said layer (27).

## Patentansprüche

1. Rohr aus Verbundmaterial für Bohrungen und/oder zum Transport von flüssigen oder gasförmigen Produkten, insbesondere zur Erdölgewinning im Meer, eines Typs gebildet aus einem laufenden Abschnitt (1) aus Verbundmaterial mit einer Matrix eines duroplastischen Harzes, der später bei der Herstellung des Rohrs an wenigstens einem seiner Enden mit einem metallischen Anschlußstück zusammengebaut ist, das einen Abschnitt (2) umfaßt, der wenigstens teilweise mit dem Inneren des laufenden Abschnitts in Eingriff steht, wobei die Innenseite besagten laufenden Abschnitts einerseits durch ein rohrförmiges Auskleidungselement (7) aus, insbesondere in Axialrichtung des Rohrs, dichten festem Material für besagten laufenden Abschnitt und andererseits durch die Außenfläche besagten Abschnitts (2) des Anschlußstücks, das mit dem Inneren des laufenden Abschnitts in Eingriff steht, bedeckt ist, wobei besagtes Auskleidungselement (7) und besagter Abschnitt (2) des Anschlußstücks in der Verlängerung des einen zum anderen angeordnet sind, wobei Mittel vorgesehen sind, um eine dichte Verbindung zwischen dem Auskleidungselement (7) und besagtem Abschnitt (2) des Anschlußstücks sicherzustellen.

2. Rohr gemäß Anspruch 1, dadurch gekennzeichnet, daß besagte Mittel zum dichten Verbinden durch eine schräge Verbindung, ein wechselseitig haftendes und/oder Kolmatierungsmaterial, das zwischen den Teilen (7, 2) in Kontakt angeordnet oder eingebracht wird, gebildet werden.

3. Rohr gemäß Anspruch 2, dadurch gekennzeichnet, daß das Auskleidungselement (7) an Ort und Stelle im Inneren des rohrförmigen Verbundabschnitts (1) einen Innendurchmesser identisch zu demjenigen des Abschnitts (2) des Anschlußstücks, der mit besagtem rohrförmigen Verbundabschnitt in Eingriff steht, aufweist und die schräge Verbindung derart realisiert ist, daß besagter innerer Abschnitt (2) des Anschlußstücks nach innen besagtes Auskleidungselement (7) abdeckt.

4. Rohr gemäß einem der Ansprüche 1 bis 3, dadurch gekennzeichnet, daß besagtes Auskleidungselement (7) aus thermoplastischem Material, vorzugsweise ausgewählt aus der Gruppe umfassend die Polyamide, insbesondere "Rilsan"®, die Polypropylene, die Polyethylene, besteht.

5. Rohr gemäß einem der Ansprüche 1 bis 3, dadurch gekennzeichnet, daß besagtes Auskleidungselement (7) aus einem Elastomermaterial, insbesondere BUNA, HNBR (Hydrogenated-Nitrile-Buna-Rubbers) besteht.

6. Rohr gemäß Anspruch 4, dadurch gekennzeichnet, daß eine Zwischenauskleidung (8) aus Verbundmaterial aus faserhaltigem thermoplastischem Harz zwischen dem rohrförmigen Verbundabschnitt (1) und besagtem inneren Auskleidungselement (7) zum Zwecke der Verstärkung der Haftung besagten inneren Auskleidungselement gegenüber besagtem rohrförmigem Verbundabschnitt (1) angeordnet ist.

7. Rohr gemäß einem der Ansprüche 1 und 4 bis 6, dadurch gekennzeichnet, daß besagte Mittel zum dichten Verbinden zwischen dem inneren Auskleidungselement (7) und dem Anschlußstück (2) durch ein metallisches Mittel (10,10',17,17'',20) gebildet werden, das die Verbindungsstelle zwischen diesbezüglichen Teilen abdeckt und durch radiale Expansion faßt.

8. Rohr gemäß Anspruch 7, dadurch gekennzeichnet, daß besagtes metallisches Mittel ein zylindrischer oder kegelstumpfförmiger Ring (10,10',17,17'') ist, der integrales Teil des Anschlußstücks (2) ist.

9. Rohr gemäß Anspruch 8, dadurch gekennzeichnet, daß der Ring zylindrisch (10,10') und mit dem Körper des Anschlußstücks (2) durch einen Verbindungsabschnitt (12) geeigneter Form verbunden ist.

10. Rohr gemäß Anspruch 7, dadurch gekennzeichnet, daß besagtes metallisches Mittel ein expandierter, zylindrischer Ring (20) aus geeignetem Material ist, der über der Verbindung dichtes Material/Metall angeordnet und in geeigneten Sitzen (21, 22) aufgenommen ist, die in den entsprechend metallischen und aus dichtem Material bestehenden aufnehmenden Abschnitten realisiert sind.

11. Rohr gemäß Anspruch 10, dadurch gekennzeichnet, daß wenigstens eine Dichtung (23) zwischen besagtem Ring (20) und dem metallischen Anschlußstück (2) angeordnet ist.

12. Rohr gemäß einem der Ansprüche 8 bis 11, dadurch gekennzeichnet, daß die Außenfläche des Rings (10,10',17,17'') oder des Rings (20) benachbart zum dichten Material mit umfänglichen Wülsten (14) oder Vorsprüngen versehen ist.

13. Rohr gemäß einem der Ansprüche 7 bis 12, dadurch gekennzeichnet, daß ein geeignetes Kolmatierungsmaterial in den Zwischenraum (9) dichtes Material/Metall gespritzt ist.

14. Rohr nach einem der Ansprüche 1 bis 13, dadurch gekennzeichnet, daß die Innenseite des inneren Auskleidungselements (7), die nicht von dem oder den Anschlußstücken (2) abgedeckt ist, von einer rohrförmigen Auskleidung (19) aus Verbundmaterial aus duroplastischem Harz abgedeckt ist.

15. Rohr gemäß Anspruch 14, dadurch gekennzeichnet, daß besagte rohrförmige Auskleidung aus Verbundmaterial aus duroplastischem Harz (19) einen Innendurchmesser identisch zu demjenigen des oder der Anschlußstücke (2) aufweist.

16. Rohr gemäß einem der Ansprüche 1 bis 15, dadurch gekennzeichnet, daß wenigstens ein Abschnitt des rohrförmigen Verbundabschnitts des Rohrs (1) ebenso wie wenigstens ein Abschnitt der benachbarten Außenwandung (3) des oder der Anschlußstücke von einem Abdeckelement in Form einer Hülse (25,26) aus einem Plastikmaterial wie einem thermoplastischen oder einem Elastomermaterial abgedeckt sind.

17. Rohr nach Anspruch 16, dadurch gekennzeichnet, daß besagte Hülse durch einen Stutzen aus thermoschrumpfbarem Material (25) gebildet ist.

18. Rohr nach Anspruch 16, dadurch gekennzeichnet, daß besagte Hülse durch eine Umwicklung (26) gebildet ist, die an jedem Anschlußstück (3) angeschweißt ist.

19. Verfahren zur Herstellung von Rohren gemäß einem der Ansprüche 1 bis 18, dadurch gekennzeichnet, daß man ausgehend von vorher existierenden Rohren des Typs gebildet aus einem laufenden Abschnitt (1) aus Verbundmaterial mit duroplastischer Matrix von konstantem Innen- und Außendurchmesser, innen mit einer dichten Schicht (7) gegebenenfalls unter Zwischenschaltung einer Schicht (8) aus faserhaltigen thermoplastischen Harz versehen, wobei besagte Schicht (7) gegebenenfalls selbst innen mit einer Haut aus Verbundmaterial mit einem duroplastischen Harz (19) versehen ist, derartige Rohre von gewünschter Länge abtrennt, um wenigstens eines der Enden mit einem Anschlußstück (2, 3) zu versehen, und man einerseits die Enden von Innenschichten (7,8,19) des laufenden Abschnitts (1) von Rohren zum Freimachen des Platzes für das Anschlußstück (2) und Präparieren der Verbindung zwischen besagter dichter Schicht (7) und dem metallischen Abschnitt (2) des Anschlußstücks und andererseits besagten Abschnitt (2) des Anschlußstücks entsprechend der gewünschten Verbindungsart bearbeitet, daß man dann besagtes Anschlußstück (2) am Ende so präparierter Rohre anbringt, und daß man die geeignete wechselseitige Haftung zwischen Metall und thermoplastischen oder duroplastischem Material ebenso wie gegebenenfalls eine zusätzliche Kolmatierung an der Stelle besagter Verbindung bewirkt .

20. Verfahren gemäß Anspruch 19, dadurch gekennzeichnet, daß besagte Verbindung Metall/thermoplastisches Material eine schräge Verbindung ist, wobei das Metall thermisch mit dem thermoplastischen Material mit oder ohne Einbringen von Material verschweißt wird.

21. Verfahren gemäß Anspruch 20, dadurch gekennzeichnet, daß die thermische Verschweißung durch Reibung durch relative Rotation zwischen dem metallischen Anschlußstück (2) und besagter Schicht aus thermoplastischem Material (7) realisiert wird.

22. Verfahren gemäß Anspruch 19, dadurch gekennzeichnet, daß besagte Verbindung Metall/thermoplastisches oder duroplastisches Material eine Verbindung durch Fassen od.dgl. eines Teils des Anschlußstücks (2) oder eines entsprechenden Teils (20) ist, die nach dem Anbringen des Abschnitts (3) des Anschlußstücks außen am Rohr realisiert wird, wobei dieser Abschnitt als Amboß während besagten Fassens dient.

23. Verfahren gemäß einem der Ansprüche 19 bis 22, dadurch gekennzeichnet, daß in dem Fall, wo man vorher existierende, außen mit einer Schicht (27) aus thermoplastischem Material versehene Rohre teilt, besagte Schicht (27) wenigstens an einem der Enden des Rohrs auf einer Länge, die für die Montage des Außenabschnitts (3) des Anschlußstücks und gegebenenfalls für eine Überdeckung durch Hülsung (25, 26) wenigstens eines Abschnitts (3) des besagten Anschlußstücks und des Außenabschnitts des Rohrs zwischen diesem Anschlußstück und besagter Schicht (27) beseitigt.
